# EUROPÄISCHE PATENTSCHRIFT

(11) **EP 2 304 832 B1**
(45) Veröffentlichungstag und Bekanntmachung des Hinweises auf die Patenterteilung: **04.04.2012**
(21) Anmeldenummer: 09802476.3
(22) Anmeldetag: 09.07.2009
(51) Int. Cl.: H01M 8/04, H01M 8/10, H01M 8/24

(54) **VERFAHREN ZUM REINIGEN MINDESTENS EINES EINTRITTSKANALS FÜR BETRIEBSGAS EINER BRENNSTOFFZELLE EINER BRENNSTOFFZELLENANORDNUNG UND BRENNSTOFFZELLENANORDNUNG**
METHOD FOR CLEANING AT LEAST ONE INLET CHANNEL FOR OPERATING GAS OF A FUEL CELL OF A FUEL CELL ARRANGEMENT, AND A FUEL CELL ARRANGEMENT
PROCÉDÉ DE NETTOYAGE D'AU MOINS UN CANAL D'ENTRÉE DE GAZ DE FONCTIONNEMENT D'UNE PILE À COMBUSTIBLE DANS UN AGENCEMENT DE PILES À COMBUSTIBLES, AINSI QU'AGENCEMENT DE PILES À COMBUSTIBLE

(30) Priorität: 28.07.2008 EP 08013520
(43) Veröffentlichungstag der Anmeldung: 06.04.2011
(73) Patentinhaber: Siemens Aktiengesellschaft, 80333 München (DE)
(72) Erfinder: MATTEJAT, Arno, 91056 Erlangen (DE)
(86) Internationale Anmeldenummer: PCT/EP2009/058732
(87) Internationale Veröffentlichungsnummer: WO 2010/012577

(56) Entgegenhaltungen:
- EP-A- 1 612 878
- EP-B- 1 194 968
- DE-A1-102006 061 225
- US-A1- 2007 154 743

## Beschreibung

Die Erfindung betrifft ein Verfahren zum Reinigen mindestens eines Eintrittskanals für Betriebsgas einer Brennstoffzelle einer Brennstoffzellenanordnung, bei dem durch elektrisch in Reihe geschaltete Brennstoffzellen Betriebsgas und elektrischer Strom geführt wird. Außerdem betrifft die Erfindung eine Brennstoffzellenanordnung mit einer Anzahl von elektrisch in Reihe geschalteten Brennstoffzellen und einem Steuermittel zum Steuern einer Betriebsgaszufuhr zu den Brennstoffzellen und eines Stromflusses durch die Brennstoffzellen.

In einer Brennstoffzellenanlage ist eine Vielzahl von Brennstoffzellen elektrisch in Reihe geschaltet, um beispielsweise zum Antrieb eines Fahrzeugs eine ausreichende Spannung bereit zu stellen. Tritt an einer der Brennstoffzellen ein Defekt auf, durch den der Umsatz von Wasserstoff und Sauerstoff zu elektrischem Strom und Wärme erheblich gestört wird, so kann die Zellenspannung in dieser Brennstoffzelle zusammenbrechen und die Brennstoffzellenanlage kann weniger elektrische Leistung erzeugen.

Eine mögliche Ursache für ein Zusammenbrechen der Spannung einer Brennstoffzelle ist deren Verstopfen. Durch in den Betriebsgasen mitgeführte Verunreinigungen können Eintrittskanäle verlegt werden, sodass die betroffene Brennstoffzelle nicht mehr genügend mit dem entsprechenden Betriebsgas versorgt wird. Insbesondere bei Brennstoffzellen, die Kohlepapiere als Träger des Katalysators und zum Stromtransport verwenden, kann es vorkommen, dass diese Kohlepapiere Einzelfasern abgeben, die vom Gas- und/oder Wasserstrom mitgerissen werden und sich an Stellen mit niedriger Strömungsgeschwindigkeit ablagern. Solche Stellen sind bevorzugt Störstellen des Gaswegs, Enden eines Rohrs oder Kanals, Abzweigungen, Sackstellen und dergleichen. Die Gasversorgung einer betroffenen Brennstoffzelle wird behindert, im schlimmsten Fall komplett verhindert, mit dem Ergebnis einer Leistungsminderung bis zum Ausfall der Zelle. Zum einwandfreien Betrieb der Brennstoffzellenanordnung muss diese gereinigt werden. Hierfür ist es bekannt, sie zu zerlegen, ihre Kanäle zu reinigen und sie wieder zusammenzusetzen.

EP 1 194 968 B1 offenbart ein Verfahren zum Reinigen von Betriebsgaskanälen einer Brennstoffzelle einer Brennstoffzellenanordnung bei dem die Zufuhr des wasserstoffhaltigen Gases unter Aufrechterhalten des elektrischen Stroms unterbrochen wird und eine Elektrolyse in zumindest einer der Brennstoffzellen betrieben wird. Das Ausblasen von lokalen Verunreinigungen der Betriebsgaszufuhr wird durch pulsiertes Einblasen von Inertgasen durchgeführt, während die Elektrolyse zum Entfernen von Verunreinigungen auf der Oberfläche des Elektrodenkatalysators eingesetzt wird.

Es ist eine Aufgabe der vorliegenden Erfindung, ein einfaches Verfahren zum Reinigen einer Brennstoffzellenanordnung anzugeben und eine Brennstoffzellenanordnung, an der eine einfache Reinigung durchführbar ist.

Die auf das Verfahren gerichtete Aufgabe wird durch ein Verfahren der eingangs genannten Art gelöst, bei dem erfindungsgemäß ein Reinigen mindestens eines Eintrittskanals für Betriebsgas an mindestens einer mit dem Betriebsgas unterversorgten Brennstoffzelle einer Brennstoffzellenanordnung von Verunreinigungen erfolgt, die den mindestens einen Eintrittskanal im Bereich einer Öffnung zu einem das Betriebsgas führenden Versorgungskanal verlegen, wobei durch elektrisch in Reihe geschaltete Brennstoffzellen der Brennstoffzellenanordnung das Betriebsgas und elektrischer Strom geführt wird, wobei eine Betriebsgaszufuhr unter Aufrechterhalten des elektrischen Stroms unterbrochen wird, wobei in zumindest der mindestens einen unterversorgten Brennstoffzelle ein Gasaufbau betrieben und ein dabei gebildetes Gas in einer Menge erzeugt wird, dass das gebildete Gas wenigstens teilweise zumindest aus der mindestens einen unterversorgten Brennstoffzelle über den mindestens einen Eintrittskanal in den Versorgungskanal strömt

Aufgrund der Unterbrechung der Betriebsgaszufuhr unter Aufrechterhalten des elektrischen Stroms wird eine Elektrolyse in zumindest einer mit Betriebsgas unterversorgten Brennstoffzellen betrieben, wobei anstelle eines Gasabbaus, wie er im Normalbetrieb einer Brennstoffzelle stattfindet, ein Gasaufbau erfolgt.

Der an sich gefürchtete Effekt der Elektrolyse kann bei abgeschaltetem Betriebsgas zur Reinigung der Brennstoffzellenanordnung verwendet werden, sodass einem Ausfall einer Brennstoffzelle entgegengewirkt werden kann.

Die Erfindung geht hierbei von der Überlegung aus, dass auch durch eine, durch eine Verstopfung bzw. Verlegung eines oder aller ihrer Eintrittskanäle mit Verunreinigungen mit Betriebsgas unterversorgte Brennstoffzelle aufgrund der Reihenschaltung der gleiche Strom fließt, wie durch die übrigen, ausreichend mit Betriebsgas versorgten Brennstoffzellen. Dieser Strom gibt einen Gasumsatz vor, der durch die Verstopfung nicht durch nachströmendes Betriebsgas gedeckt werden kann. Es entsteht ein Unterdruck, sodass die unterversorgte Brennstoffzelle auch aus einem Austrittskanal Betriebsgas ansaugt. Der Austrittskanal wird dadurch temporär zu einem weiteren Eintrittskanal. Dieses beidseitige Zuführen von Betriebsgas in die Brennstoffzelle führt dazu, dass die Brennstoffzelle nicht mehr durchströmt wird und sich somit Inertgas in der Brennstoffzelle anreichert. In dieser Zelle entsteht somit eine Gaszusammensetzung, die sich von der Gaszusammensetzung der Nachbarzellen unterscheidet, da sie mehr Inertgas als diese enthält.

Wird die Betriebsgaszufuhr zu der Brennstoffzellenanordnung in einem solchen Zustand getrennt, ohne dass der Strom unterbrochen wird, dann werden die in den Brennstoffzellen enthaltenen Betriebsgasvorräte soweit verbraucht, bis entweder die Sauerstoffseite oder die Wasserstoffseite der einzelnen Brennstoffzellen kein Betriebsgas mehr enthält. In diesem Zustand bricht die Zellspannung zusammen. In einer Brennstoffzellenanordnung, in der die Gasverteilung gleichmäßig ist, brechen auch die Zellspannungen der Brennstoffzellen gleichmäßig bzw. in etwa gleichzeitig zusammen. Sind jedoch in der Brennstoffzellenanordnung unterversorgte Brennstoffzellen enthalten, die wesentlich mehr Inertgas als ihre Nachbarn enthalten, dann ist der in ihnen vorhandene Betriebsgasvorrat schneller verbraucht als in den anderen Brennstoffzellen. Der Strom fließt, getrieben durch die noch arbeitenden Brennstoffzellen, weiter und verursacht in der betroffenen Brennstoffzelle nun einen Gasaufbau durch eine Elektrolyse, bei der auf der Wasserstoffseite Sauerstoff und auf der Sauerstoffseite Wasserstoff gebildet wird. Anstelle des Gasabbaus findet ein Gasaufbau statt.

Bei der Elektrolyse entstandenes Gas, im Folgenden auch als Elektrolysegas bezeichnet, wird aus einer Betriebsgaszuführung aus der Brennstoffzelle ausgeblasen. Haben sich Verunreinigungen, die zur Behinderung der Gasversorgung führten, am Eingang einer Brennstoffzelle angesammelt, so können diese Verunreinigungen bei genügend hoher Gasproduktion von dort weggeblasen werden, beispielsweise zurück in einen Betriebsgas führenden Versorgungskanal. Bevorzugt werden auch Verunreinigungen, die sich aufgrund eines Unterdrucks in der unterversorgten Brennstoffzelle durch ein Ansaugen von Betriebsgas im Bereich des Übergangs eines Austrittskanals in einen Entsorgungskanal gebildet haben könnten, gleichzeitig durch das Elektrolysegas ausgeblasen.

Dort, also im Versorgungskanal oder zudem im Entsorgungskanal, bleiben die ausgeblasenen Verunreinigungen dann im Idealfall an einer Stelle liegen, an der sie den Gaszutritt des Betriebsgases zur Brennstoffzelle nicht mehr behindern. Es kann zwar nicht sicher verhindert werden, dass die weggeblasenen Verschmutzungen im Versorgungskanal sich erneut vor einem Zelleneintritt sammeln. Jedoch eignet sich das Verfahren mindestens zum temporären Verbessern der Brennstoffzellenleistung durch eine Reinigung kritischer Stellen innerhalb der Brennstoffzellenanordnung.

Der Strom durch die Brennstoffzellen fließt durch eine an die Brennstoffzellenanordnung angeschaltete Last, z.B. eine Batterie oder einen Motor, zu dessen Betrieb die Brennstoffzellenanordnung regulär vorgesehen ist. Vorteilhafterweise wird der durch diese Last verursachte Stromfluss aufrechterhalten, wenn die Betriebsgaszufuhr unterbrochen wird. Hierdurch kann ein hoher Stromfluss aufrechterhalten bleiben, der zur Erzeugung einer erheblichen Menge Elektrolysegas geeignet ist, um beim Ausblasen der Verschmutzungen einen vorteilhaft hohen Gasdruck zu erreichen. Ist die Last ein DC-Steller, kann der Strom weiter in z.B. ein Stromnetz eingespeist werden.

Das Unterbrechen der Betriebsgaszufuhr geschieht zweckmäßigerweise schnell, insbesondere innerhalb von 500 ms, zweckmä-βigerweise innerhalb von 200 ms, beispielsweise durch das Zufallen eines Unterbrechungsventils. Die Unterbrechung der Betriebsgaszufuhr kann dabei manuell durch einen Bediener oder automatisiert, beispielsweise automatisch bei einem Absinken der Spannung einer Zelle unter 90% ihres normalen Spannungswerts, erfolgen.

Das erfindungsgemäße Verfahren kann als kurze Unterbrechung eines regulären Betriebs der Brennstoffzellenanordnung durchgeführt werden. Ein vollständiges Herunterfahren und beispielsweise Spülen der Brennstoffzellenanordnung ist nicht notwendig. Zum Beenden der Reinigung kann der Strom unterbrochen werden, so dass die Elektrolyse und somit das Ausblasen beendet wird. Anschließend kann der reguläre Betrieb wieder aufgenommen werden, indem die Betriebsgaszufuhr wieder hergestellt und die Last wieder angeschaltet wird. Betriebsgas strömt in die Brennstoffzellenanordnung und an das Elektrolysegas und eliminiert dieses in einer Wärme erzeugenden Oxidation. Zum Vermeiden der Wärme erzeugenden Reaktion kann das Elektrolysegas aus der Brennstoffzellenanordnung ausgeblasen werden oder durch ein kurzzeitiges Evakuieren entfernt werden.

Häufig sammeln sich Verschmutzungen an der Wasserstoffseite einer Brennstoffzelle. Wird allein die Zufuhr des wasserstoffhaltigen Gases unterbrochen unter aufrechterhalten der Zufuhr des sauerstoffhaltigen Gases und des elektrischen Stroms, so kann nur die Wasserstoffseite einer betroffenen Brennstoffzelle frei geblasen werden, was jedoch üblicherweise ausreicht. Allgemein gesprochen kann eine Unterbrechung eines der Betriebsgase, z.B. des wasserstoffhaltigen Betriebsgases, ausreichend sein, um das Verfahren schnell und effizient durchzuführen.

In einer vorteilhaften Ausführungsform der Erfindung wird eine nach dem Unterbrechen der Betriebsgaszufuhr auftretende negative Zellspannung erfasst und der Strom wird in Abhängigkeit von der negativen Zellspannung unterbrochen, beispielsweise durch das Trennen der betriebenen Last von der Brennstoffzellenanordnung. Die Abhängigkeit kann in irgendeinem Parameter der negativen Zellspannung liegen, z.B. ihrer Dauer, Größe, ihrem Verlauf. Das bedeutet, dass der Strom beispielsweise unterbrochen wird, wenn ein bestimmter negativer Zellspannungsgrenzwert erreicht wird. Die Wahl eines geeigneten Parameters und seines kritischen Werts, bei dem der Strom unterbrochen wird, hängt dabei vom Aufbau der Brennstoffzellenanordnung, einem verwendeten Brennstoffzellentyp, den Betriebsgasen usw. ab und ist für jede Brennstoffzellenanordnung gesondert festzulegen. Es kann verhindert werden, dass die Menge des Elektrolysegases unkontrolliert groß ist, um eine unkontrollierte Wärmereaktion durch Oxidation von Elektrolysegas und Betriebsgas zu vermeiden. Die negative Zellspannung zeigt das Auftreten der Elektrolyse an und damit das Entstehen des Elektrolysegases.

Es kann vorzugsweise nach einer kritischen Zeitdauer der Strom unterbrochen werden und somit auch das Entstehen von noch mehr Elektrolysegas. Die kritische Zeitdauer kann eine fest eingestellte Zeit oder eine nach einem oder mehreren Parametern der Brennstoffzellenanordnung im Moment oder vorher berechnete Zeit sein. Alternativ kann anstelle der Stromunterbrechung die Betriebsgaszufuhr wieder hergestellt und hierdurch das Entstehen von noch mehr Elektrolysegas unterbunden werden.

Die Menge des entstehenden Elektrolysegases kann noch besser kontrolliert werden, wenn während des Auftretens der negativen Zellspannung ein Integral über den Strom nach der Zeit gebildet wird und bei Überschreiten eines kritischen Integralwerts der Strom unterbrochen oder die Betriebsgaszufuhr wieder hergestellt wird. Da die Menge des erzeugten Elektrolysegases von der Stärke und der Zeitdauer des Stroms abhängt, steht die Menge in direkter Verbindung mit dem zeitlichen Integral über den Strom. Übersteigt das Ergebnis dieses Integrals den vorbestimmten Wert, so wird der Stromfluss unterbrochen und das Erzeugen des Elektrolysegases wird beendet.

Je größer ein Gasstrom von Elektrolysegas aus der betroffenen Brennstoffzelle heraus ist, desto besser können Verschmutzungen von der Brennstoffzelle weggeblasen werden. Es ist daher vorteilhaft, wenn der Gasstrom zumindest kurzzeitig hoch ist. Ein hoher Gasstrom kann erreicht werden, wenn in der Brennstoffzellenanordnung unmittelbar vor dem Unterbrechen des Betriebsgases Strom fließt, bevorzugt wenn die Brennstoffzellenanordnung über einen Zeitraum von zumindest 30 Sekunden auf zumindest 50% ihrer Nennlast betrieben wird, insbesondere über einen Zeitraum von zumindest 2 Minuten auf zumindest 90% ihrer Nennlast betrieben wird. Durch den damit verbundenen hohen Strom durch eine verstopfte Brennstoffzelle kann ein hoher Inertgasanteil in dieser Brennstoffzelle erzeugt werden, da diese Brennstoffzelle durch den hohen Gasverbrauch von beiden Seiten Betriebsgas ansaugt und nicht mehr durchströmt wird. Je höher der Inertgasanteil in der Brennstoffzelle ist, desto früher bricht deren Zellspannung zusammen und desto mehr Elektrolysegas kann entstehen, bevor die Zellspannung der übrigen Brennstoffzellen der Brennstoffzellenanordnung zusammenbricht und somit auch der zur Elektrolyse notwendige Strom. Noch vorteilhafter ist ein Betrieb von zumindest 5 Minuten auf zumindest 90%, insbesondere 100% der Nennlast.

Als eine alternative oder weitere Möglichkeit zum Erzielen eines hohen Gasstroms aus einer verlegten bzw. verstopften Brennstoffzelle heraus kann die Brennstoffzellenordnung vorteilhafter Weise unmittelbar vor dem Unterbrechen der Zufuhr des Betriebsgases bei einer um zumindest um 5 K höheren Temperatur als einer für einen Nennlastbetrieb vorgesehenen Solltemperatur betrieben werden. Durch die erhöhte Temperatur wird der Partialgasdruck des in den Brennstoffzellen immer vorhandenen Wassers erhöht, was eine Erhöhung des Inertgasanteils entspricht. Je mehr Wasserdampf in den Brennstoffzellen vorliegt, desto weniger Raum steht für die Betriebsgase zur Verfügung. Bei einem hohen Wasserdampfpartialdruck bricht somit die Spannung einer verlegten bzw. verstopften Brennstoffzelle schneller zusammen und es kann mehr Elektrolysegas erzeugt werden. Zweckmäßigerweise wird die Brennstoffzellenanordnung bei einer um zumindest 10 K höheren Temperatur als der für den Nennwertbetrieb vorgesehenen Solltemperatur betrieben.

Für ein erfolgreiches Ausblasen einer verlegten bzw. verstopften Brennstoffzelle ist es vorteilhaft, wenn das Elektrolysegas besonders schnell in der Brennstoffzelle entsteht. Die Menge des erzeugten Elektrolysegases ist direkt abhängig von der Stärke des Stroms durch die verstopfte Brennstoffzelle. Eine große Menge Elektrolysegas kann in kurzer Zeit erzeugt werden, wenn nach der Betriebsgasunterbrechung zur Erhöhung des Stroms ein Kurzschluss im Stromkreis der Brennstoffzellenanordnung erzeugt wird.

Zweckmäßigerweise ist der Kurzschluss durch einen den Kurzschlussstrom begrenzenden Kurzschlusswiderstand geführt, um die elektrische Belastung der Brennstoffzellenanordnung in einem akzeptablen Rahmen zu halten. Der Kurzschlusswiderstand ist vorteilhafter Weise durch einen zur Kühlung vorgesehenen Kühler gekühlt und insbesondere geringer als ein kleinster Widerstand der an der Brennstoffzellenanordnung angeschalteten Last, die durch die Brennstoffzellenanordnung betrieben wird, bei gleichem Strom. Der durch diesen geführten Kurzschluss erzeugte Strom ist mithin zweckmäßigerweise höher als der in einem regulären Betrieb mit der Last erzeugte Strom. Das Auftreten einer Verstopfung muss kein regelmäßiger Vorgang sein, sondern kann mal schneller und mal langsamer auftreten. Es ist daher vorteilhaft, wenn die Brennstoffzellenanordnung auf ein Auftreten oder Anwachsen einer Verstopfung hin überwacht werden kann. Eine solche Überwachung kann erreicht werden, wenn die Zellspannung einer Brennstoffzelle in Abhängigkeit vom Strom durch die Brennstoffzelle erfasst wird. Bricht die Zellspannung auf einen Wert unterhalb eines vorbestimmten Minimalwerts ein, so ist dies ein Hinweis darauf, dass ab diesem Minimalwert ein Ansaugen des Betriebsgases aus dem Zellenaustritt bzw. einer Austrittsöffnung erfolgt und eine Durchströmung der Brennstoffzelle mit Betriebsgas unterbunden wird, sodass sich in dieser immer mehr Inertgas anreichert und die Zellspannung zusammenbricht. Es kann nun die Betriebsgaszufuhr unter aufrechterhalten des elektrischen Stroms unterbrochen werden, sodass das Verfahren zum Reinigen gestartet wird. Die Betriebsgaszufuhr muss nicht unmittelbar nach dem Erkennen des Vorhandenseins einer Verunreinigung geschehen, sondern kann auch später erfolgen.

Auch das Erhöhen der Betriebstemperatur kann zum Überwachen der Brennstoffzellen auf eine Verschmutzung hin verwendet werden. Durch den höheren Wasserdampfanteil in den Brennstoffzellen kann - insbesondere bei Nennlast - eine Verstopfung durch ein Zusammenbrechen der Spannung einer Brennstoffzelle auch dann erkannt werden, wenn die Brennstoffzelle im regulären Betrieb, also bei einem Betrieb mit der geringeren Betriebstemperatur, noch nicht auffällig ist. Die Brennstoffzellenanordnung kann nun noch eine Weile weiter betrieben werden und es kann ein für ein Reinigen geeigneter Zeitpunkt ausgewählt werden, ohne den Betrieb zu stören.

Mit gleichem Vorteil kann das Betriebsgas mit einem zweckmä-βigerweise reinen Inertgas vermischt und in die Brennstoffzellenanordnung eingeführt werden. Auch unter dieser Bedingung bricht die Zellspannung einer leicht verstopften Brennstoffzelle bereits ein, ohne dass dies bei einem regulären Betrieb ohne zusätzlich eingeführtes Inertgas auftreten muss. Des Weiteren kann das Zuführen des Inertgases zum Betriebsgas auch zu einer Erhöhung der Elektrolysegasproduktion genutzt werden. Durch den hohen Inertgasanteil im Betriebsgas kann ein besonders hoher Inertgasanteil in der verstopften Brennstoffzelle erreicht werden, sodass deren Zellspannung bei Unterbrechen der Betriebsgaszufuhr besonders schnell umkehrt und viel Elektrolysegas erzeugt werden kann.

Die auf die Brennstoffzellenanordnung gerichtete Aufgabe wird durch eine Brennstoffzellenanordnung der eingangs genannten Art gelöst, bei der erfindungsgemäß das Steuermittel dazu vorgesehen ist, die Betriebsgaszufuhr unter aufrechterhalten des elektrischen Stromflusses durch die Brennstoffzellen zu unterbrechen und das erfindungsgemäße Verfahren durchzuführen. Es kann ein Ausblasen von Elektrolysegas aus der verstopften Brennstoffzelle erreicht werden, die hierdurch gereinigt werden kann.

Der Aufrecht erhaltende elektrische Strom ist zweckmäßigerweise 70%, insbesondere 100% des Nennstroms, also des bei Volllast auftretenden Stroms. Das Steuermittel ist vorteilhafter Weise dazu vorgesehen, eines, mehrere oder alle der oben beschriebenen Verfahrensdetails zu steuern.

In der Regel lagern sich Verschmutzungen am Eintrittsbereich der Brennstoffzellen an, sodass sie bei Umkehrung der Richtung der Gasströmung weggeblasen werden können. Um dieses Ausblasen besonders effektiv zu gestalten, ist es vorteilhaft, wenn das Elektrolysegas bevorzugt beim für eine Betriebsgaszufuhr vorgesehenen Eintritt einer unterversorgten Brennstoffzelle herausströmt und nicht durch deren zur Abführung der Betriebsgase vorgesehenen Austritt.

Hierzu sind die Brennstoffzellen vorteilhafter Weise jeweils durch eine Eintrittskanalanordnung mit einem Versorgungskanal und einer Austrittskanalanordnung mit einem Entsorgungskanal verbunden, wobei die Eintrittskanalanordnung einen geringeren Strömungswiderstand aufweist als die Austrittskanalanordnung. Ist der Strömungswiderstand am Eintritt klein und am Austritt größer, wird das produzierte Elektrolysegas vorwiegend zum Eintritt heraus geblasen, also dort wo die Verstopfung beseitigt werden soll.

Der Strömungswiderstand kann durch die Anzahl von Kanälen eingestellt werden, sodass die Eintrittskanalanordnung bevorzugt mehr Eintrittskanäle aufweist als die Austrittskanalanordnung Austrittskanäle. Alternativ oder zusätzlich kann die Eintrittskanalanordnung länger als die Austrittskanalanordnung sein. Ebenfalls möglich ist es, dass die Eintrittskanalanordnung einen größeren engsten Querschnitt aufweist, als die Austrittskanalanordnung.

Die Erfindung wird anhand von Ausführungsbeispielen näher erläutert, die in den Zeichnungen dargestellt sind. Es zeigen:
- FIG 1: einen Ausschnitt einer Brennstoffzellenanordnung mit einer Steuereinheit und einer elektrischen Last in einer schematischen Darstellung und
- FIG 2: eine schematische Schnittdarstellung durch einen Gasraum einer Brennstoffzelle.

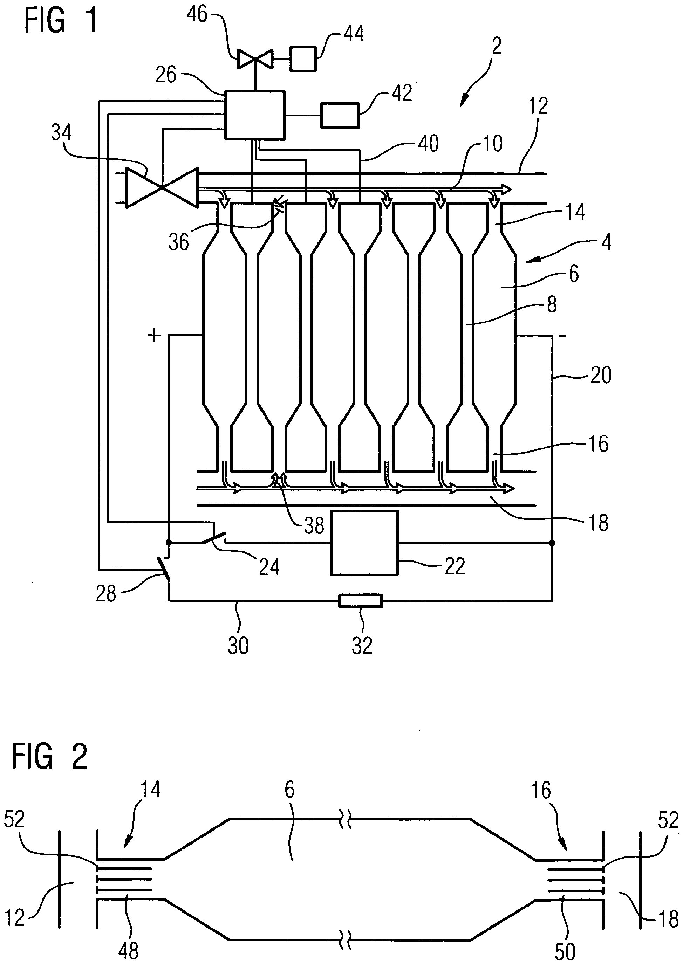

FIG 1 zeigt einen Ausschnitt aus einer Brennstoffzellenanordnung 2 in einer schematischen Funktionsdarstellung. Die Brennstoffzellenanordnung 2 ist als Brennstoffzellenblock ausgeführt und umfasst eine Vielzahl von PEM-Brennstoffzellen 4 (Polymer-Elektrolyt-Membran oder Proton Exchange Membran), von denen der Übersichtlichkeit halber nur wenige angedeutet sind. Die Brennstoffzellen 4 umfassen jeweils zwei Gasräume 6, von denen in FIG 1 nur jeweils einer dargestellt ist. Die beiden Gasräume 6 sind ein Wasserstoffgasraum und ein Sauerstoffgasraum, wobei zwischen jeweils einem Wasserstoffgasraum einer Brennstoffzelle und einem Sauerstoffgasraum einer benachbarten Brennstoffzelle 4 ein Elektrolyt 8 angeordnet ist.

Die Brennstoffzellen 4 werden mit Betriebsgas 10 versorgt, dass durch einen Versorgungskanal 12 an die Brennstoffzellen 4 heranströmt und durch eine Eintrittskanalanordnung 14 in den entsprechenden Gasraum 6 der Brennstoffzellen 4 gelangt. Durch eine Austrittskanalanordnung 16 strömt das nicht verbrauchte Betriebsgas 10 wieder aus den Brennstoffzellen 4 heraus und wird durch einen Entsorgungskanal 18 von den Brennstoffzellen 4 weggeführt. Auf diese Weise sind die einzelnen Brennstoffzellen 4 der Brennstoffzellenanordnung 2 parallel mit beiden Betriebsgasen versorgt. Als wasserstoffhaltiges Betriebsgas wird Gas mit einem Wasserstoffgehalt von über 98 % Wasserstoffanteil und einem geringen Inertgasanteil verwendet. Als sauerstoffhaltiges Gas kommt Luft oder hochkonzentrierter Sauerstoff in Frage.

Die Brennstoffzellen 4 sind elektrisch in Reihe geschaltet, wie durch einen Stromkreis 20 mit einer Last 22 angedeutet ist. Die Last 22 ist ein Motor zum Antrieb eines Fahrzeugs. Der Stromkreis 20 kann durch einen Schalter 24 unterbrochen und geschlossen werden, der von einer Steuereinheit 26 angesteuert ist. Mittels eines weiteren Schalters 28 kann ein Kurzschlusskreis 30 über einen Kurzschlusswiderstand 32 geschlossen werden, zweckmäßigerweise bei geöffnetem Schalter 24.

Ebenfalls von der Steuereinheit 26 angesteuert ist ein Ventil 34 zum Öffnen und Schließen des Versorgungskanals 12, sodass eine Betriebsgaszufuhr des z.B. wasserstoffhaltigen Betriebsgases 10 unterbrochen und geöffnet werden kann. Das Ventil 34 ist ein Kugelventil, das bei einer entsprechenden Ansteuerung in einem Zeitraum von weniger als 200 ms zufällt und so den Versorgungskanal 12 verschließt.

Während des Betriebs der Brennstoffzellenanordnung 2 sammeln sich Verunreinigungen 36 an solchen Stellen innerhalb des Gasstroms an, an denen der Gasstrom behindert oder verlangsamt ist, beispielsweise an Knicken, Verengungen oder Sackgassen. In FIG 1 ist beispielhaft dargestellt, wie sich die Verunreinigungen 36 an der Öffnung einer Eintrittskanalanordnung 14 zum Versorgungskanal 12 angesammelt haben und die Eintrittskanalanordnung 14 weitgehend verlegen. Hierdurch gelangt beim Nennlastbetrieb der Brennstoffzellenanordnung 2 beispielsweise nur noch halb soviel wasserstoffhaltiges Betriebsgas 10 in den entsprechenden Wasserstoffgasraum 6 der verstopften Brennstoffzelle 4.

Durch die elektrisch in Reihe Schaltung der Brennstoffzellen 4 wird jedoch durch alle Brennstoffzellen 4 der Brennstoffzellenanordnung 2 der gleiche Strom getrieben. Da zur Aufrechterhaltung der Zellspannung der betroffenen Brennstoffzelle 4 nicht genug wasserstoffhaltiges Betriebsgas 10 zur Verfügung steht, saugt diese Brennstoffzelle 4 Betriebsgas 10 aus dem Entsorgungskanal 18 in ihren Wasserstoffgasraum 6, wie durch Pfeile 38 angedeutet ist. Der Wasserstoffgasraum 6 wird nicht mehr von Betriebsgas 10 durchströmt und es sammelt sich im Laufe der Zeit immer mehr Inertgas im Wasserstoffgasraum 6 an. Je höher der Inertgasanteil ist, desto weiter fällt die Zellspannung, bis sie schließlich zusammenbricht und die Brennstoffzelle 4 ausfällt.

Die Verunreinigungen sind in FIG 1 nur an einer Einmündung einer Eintrittskanalanordnung 14 am Versorgungskanal 12 dargestellt, wohingegen sich die Verunreinigungen 36 im regulären Betrieb der Brennstoffzellenanordnung 2 an vielen Stellen innerhalb der Brennstoffzellenanordnung 2 sammeln können. Hierdurch können eine Mehrzahl von Brennstoffzellen 4 im Laufe der Zeit ausfallen und die Leistung der Brennstoffzellenanordnung 2 beeinträchtigen.

Um diesen Verunreinigungsprozess zu verzögern, kann in einem ersten und einfachen Ausführungsbeispiel die Betriebsgaszufuhr beider Betriebsgase unter Last gleichzeitig unterbrochen werden. Anschließend wird gewartet, bis die Gesamtspannung der Brennstoffzellenanordnung zusammengebrochen ist. Die Verunreinigung kann nun von einer kritischen Stelle an einen anderen Ort weggeblasen sein. Anschließend kann die Betriebsgaszufuhr wieder hergestellt und der reguläre Betrieb wieder aufgenommen werden.

Weitere Möglichkeiten zum Verfeinern des Verfahrens sind im Folgenden beschrieben. So kann der Strom zu einem geeigneten Zeitpunkt unterbrochen werden zum Beenden der Elektrolyse. Ebenfalls ist es möglich, die Brennstoffzellenanlage 2 vor einem Fortsetzen des Betriebs zu evakuieren oder mit Inertgas zu spülen, z.B. mit N₂.

Des Weiteren kann die Zellspannung der Brennstoffzellen 4 von der Steuereinheit 26 überwacht werden. Hierzu ist sie über elektrische Leitungen 40, von denen in FIG 1 der Übersichtlichkeit halber nur drei zur Überwachung von zwei benachbarten Brennstoffzellen 4 dargestellt sind, mit den Brennstoffzellen 4 verbunden. Die Zellspannung der einzelnen Brennstoffzellen 4 wird in Abhängigkeit von der Stromstärke erfasst und es wird erkannt, wenn eine Zellspannung stark absinkt oder zusammenbricht.

Bei einem Zusammenbrechen einer Zellspannung ist der Betrieb der Brennstoffzellenanordnung 2 bereits erheblich beeinträchtigt. Um einen bevorstehenden Ausfall einer Brennstoffzelle 4 frühzeitig erkennen zu können, steuert die Steuereinheit 26 eine Kühleinheit 42 derart an, dass die Temperatur innerhalb der Brennstoffzellenanordnung 2 um mehr als 5 K, insbesondere um mehr als 10 K, gegenüber einer Solltemperatur für einen Nennlastbetrieb angehoben wird. Die Kühleinheit 42 kann einen Kühler und die Brennstoffzellenanordnung 2 durchströmendes Kühlmittel umfassen mit einem Regel- oder Steuermittel zum Einstellen der Temperatur.

Durch die erhöhte Temperatur wird der Wasserdampfpartialdruck innerhalb der Brennstoffzellen 4 erhöht, sodass weniger wasserstoffhaltiges Betriebsgas 10 in den Wasserstoffgasräumen 6 zur Aufrechterhaltung der elektrochemischen Reaktion am Elektrolyten 8 zur Verfügung steht. Bei hoher Last, beispielsweise dem Betrieb bei Nennlast, also bei Volllastbetrieb, bricht hierdurch die Zellspannung bei mangelnder Durchströmung einer teilweise verlegten Brennstoffzelle 4 schneller zusammen. Durch diesen Testbetrieb kann eine Beeinträchtigung durch Verunreinigungen 36 bereits erkannt werden, wenn sie in einem regulären Betrieb noch nicht auffällig ist.

Der gleiche Effekt kann durch die Beimischung von Inertgas aus einem Inertgasspeicher 44 in das Betriebsgas 10 im Versorgungskanal 12 erreicht werden. Hierzu ist die Steuereinheit 26 mit einem Ventil 46 verbunden, bei dessen Öffnung Inertgas in den Versorgungskanal 12 einströmt. Auch durch die Erhöhung des Inertgasanteils im Betriebsgas 10 bricht die Zellspannung einer teilweise verlegten Brennstoffzelle 4 bei einem solchen Testbetrieb schneller zusammen als im regulären Betrieb, sodass eine sich anbahnende Störung erkannt werden kann.

Ist eine sich anbahnende oder bereits im regulären Betrieb vorliegende Störung erkannt, so wird die Brennstoffzellenanordnung 2 gereinigt. Hierzu kann zunächst der Inertgasanteil und/oder Wasserdampfanteil in der betreffenden Brennstoffzelle 4 erhöht werden. Außerdem wird die Brennstoffzellenanordnung 2 über einen Zeitraum bei Nennlast betrieben, sodass sich im Gasraum der betroffenen Brennstoffzelle 4 möglichst viel Inertgas ansammelt. Der Zeitraum kann im Vorhinein festgelegt sein, z.B. auf 10 Minuten oder zumindest 10 Minuten, oder aus Betriebsparametern festgelegt werden, z.B. in Abhängigkeit von der Restspannung der verstopften Brennstoffzelle 4 bestimmt werden. Unterschreitet die Zellspannung einen vorbestimmten Wert, so kann der Nennlastbetrieb beendet und das Reinigen eingeleitet werden.

Nach diesen Vorbereitungen wird das Ventil 34 geschlossen und damit die Betriebsgaszufuhr unterbrochen. Der Strom durch die Brennstoffzellen 4 bleibt durch die weiterhin angeschaltete Last 22 erhalten, sodass die elektrochemische Reaktion in allen Brennstoffzellen 4 weiterläuft. Sobald das Betriebsgas in der verlegten Brennstoffzelle 4 verbraucht ist, bricht die Zellspannung zusammen und kehrt sich durch den weiterhin durch diese Brennstoffzelle 4 getriebenen Strom im Vorzeichen um. Hierdurch beginnt eine Elektrolyse, durch die sich z.B. im Wasserstoffgasraum 6 der verlegten Brennstoffzelle 4 Sauerstoff bildet. Bei ausreichender Bildung von Sauerstoff entsteht ein Überdruck im Wasserstoffgasraum 6 und Gas bläst aus der Brennstoffzelle 4 aus. Die Verunreinigungen 36 werden zumindest teilweise weggeblasen und die Eintrittkanalanordnung 14 gereinigt, sodass durch diese wieder genügend Betriebsgas in die zuvor verlegte Brennstoffzelle 4 einströmen kann, um einen regulären Betrieb zu gewährleisten.

Um nicht unkontrolliert viel Elektrolysegas entstehen zu lassen überwacht die Steuereinheit 26 den Zeitraum des Vorliegens der negativen Zellspannung, also der im Vorzeichen gegenüber dem regulären Betrieb umgekehrten Zellspannung, und unterbricht den Stromkreis 20 nach einer vorgegebenen Zeitdauer. In einer verbesserten Ausführungsform bildet die Steuereinheit 26 durch das Messen der Stromstärke und der Zeitdauer der negativen Zellspannung das zeitliche Integral über die Stromstärke von dem Zeitpunkt an, ab dem die Zellspannung negativ wird, bis zur aktuell vorliegenden Zeit. Überschreitet das Ergebnis des Integrals einen vorbestimmten Wert wird der Stromkreis 20 unterbrochen.

Zur Verstärkung der Elektrolyse kann der Schalter 28 geschlossen und der Schalter 24 geöffnet werden, sodass ein Kurzschluss über der Brennstoffzellenanordnung 2 entsteht, der jedoch durch den Kurzschlusswiderstand 32 zweckmäßigerweise kontrolliert abläuft, sodass die Brennstoffzellenanordnung 2 nicht beschädigt wird. Hierdurch kann die Elektrolyse so heftig in Betrieb gesetzt werden, dass ein Gasstoß aus der verstopften Brennstoffzelle 4 eine kräftige Reinigung der Brennstoffzellenanordnung 2 bewirkt.

Das Elektrolysegas strömt aus der betroffenen Brennstoffzelle heraus, wenn es zusammen mit dem Inertgas einen Überdruck im Verhältnis zur Umgebung, also zum Versorgungskanal 12 und Entsorgungskanal 18 bildet. Um durch dieses Gasausströmen eine Reinigung zu erzielen, ist es vorteilhaft, wenn das Gas zum Eintritt in die Brennstoffzelle 4 herausströmt und möglichst wenig durch den Austritt, da dort keine Gasstromrichtungsumkehr erreicht wird. Hierzu ist der Strömungswiderstand am Eintritt geringer als am Austritt. In FIG 1 ist das durch einen größeren Kanalquerschnitt der Eintrittskanalanordnung 14 gegenüber der Austrittskanalanordnung 16 dargestellt. Au-βerdem ist die Eintrittskanalanordnung 14 kürzer als ausgeführt als die Austrittskanalanordnung 16, wodurch ebenfalls ein geringerer Strömungswiderstand an der Eintrittskanalanordnung 14 erreicht werden kann.

FIG 2 zeigt eine weitere Möglichkeit einer Einstellung des Strömungswiderstands an der Eintrittskanalanordnung 14 und der Austrittskanalanordnung 16. In der schematischen Darstellung aus Figur 2 ist gezeigt, dass die Eintrittskanalanordnung 14 vier Eintrittskanäle 48 und die Austrittskanalanordnung 16 nur drei Austrittskanäle 50 umfasst. Als weitere Maßnahme sind die Austrittskanäle 50 länger als die Eintrittskanäle 48. Als dritte Maßnahme ist der engste Strömungsquerschnitt der Eintrittskanäle 48 größer als der der Austrittskanäle 50. Zwar sind die Strömungsquerschnitte der Eintrittskanäle 48 und der Austrittskanäle 50 über die Länge der Kanäle gleich, an deren äußeren Enden sind jedoch Verengungen 52 angebracht, die den engsten Strömungsquerschnitt jeweils bilden. Die Verengungen 52 sind bei den Eintrittskanälen 48 geringer ausgeführt als bei den Austrittskanälen 50. Auch hierdurch ist der Strömungswiderstand der Eintrittskanalanordnung 14 geringer als der der Austrittskanalanordnung 16.

Während FIG 2 die drei Maßnahmen in Kombination zeigt, sind sie selbstverständlich auch einzeln zur gewünschten Einstellung der Strömungswiderstände heranziehbar. Außerdem sind auch die Maßnahmen zur Erhöhung des Gasstoßes aus der Brennstoffzelle 4 und die Maßnahmen zur Analyse einer Verstopfung einzeln anwendbar.

## Patentansprüche

1. Verfahren zum Reinigen mindestens eines Eintrittskanals für Betriebsgas mindestens einer mit dem Betriebsgas unterversorgten Brennstoffzelle einer Brennstoffzellenanordnung (2) von Verunreinigungen, die den mindestens einen Eintrittskanal im Bereich einer Öffnung zu einem das Betriebsgas führenden Versorgungskanal verlegen, bei dem durch elektrisch in Reihe geschaltete Brennstoffzellen (4) der Brennstoffzellenanordnung (2) das Betriebsgas (10) und elektrischer Strom geführt wird, wobei eine Betriebsgaszufuhr unter Aufrechterhalten des elektrischen Stroms unterbrochen wird, wobei in zumindest der mindestens einen unterversorgten Brennstoffzelle ein Gasaufbau betrieben und ein dabei gebildetes Gas in einer Menge erzeugt wird, dass das gebildete Gas wenigstens teilweise zumindest aus der mindestens einen unterversorgten Brennstoffzelle über den mindestens einen Eintrittskanal in den Versorgungskanal strömt.

2. Verfahren nach Anspruch 1,
**dadurch gekennzeichnet, dass** die Betriebsgaszufuhr wieder hergestellt wird und Betriebsgas (10) zum gebildeten Gas strömt.

3. Verfahren nach Anspruch 1 oder 2,
**dadurch gekennzeichnet, dass** sauerstoffhaltiges und wasserstoffhaltiges Gas als zwei Betriebsgase (10) durch die Brennstoffzellen (4) geführt werden und die Zufuhr des wasserstoffhaltigen Gases unterbrochen wird unter Aufrechterhalten der Zufuhr des sauerstoffhaltigen Gases und des elektrischen Stroms.

4. Verfahren nach einem der vorhergehenden Ansprüche,
**dadurch gekennzeichnet, dass** eine nach dem Unterbrechen der Betriebsgaszufuhr auftretende negative Zellspannungen erfasst wird und der Strom bei Erreichen eines negativen Zellspannungsgrenzwerts unterbrochen wird.

5. Verfahren nach einem der Ansprüche 1 bis 3,
**dadurch gekennzeichnet, dass** eine nach dem Unterbrechen der Betriebsgaszufuhr auftretende negative Zellspannungen erfasst wird, dass eine Zeitdauer des Auftretens der negativen Zellspannung erfasst wird und dass bei Überschreiten einer kritischen Zeitdauer der Strom unterbrochen wird.

6. Verfahren nach einem der Ansprüche 1 bis 3,
**dadurch gekennzeichnet, dass** eine nach dem Unterbrechen der Betriebsgaszufuhr auftretende negative Zellspannungen und eine Zeitdauer des Auftretens der negativen Zellspannung erfasst wird, dass während des Auftretens der negative Zellspannung ein Integral über den Strom nach der Zeit gebildet wird und bei Überschreiten eines kritischen Integralwerts der Strom unterbrochen wird.

7. Verfahren nach einem der vorhergehenden Ansprüche,
**dadurch gekennzeichnet, dass** die Brennstoffzellenanordnung (2) unmittelbar vor dem Unterbrechen der Betriebsgaszufuhr über einen Zeitraum von zumindest 2 min auf zumindest 90% ihrer Nennlast betrieben wird.

8. Verfahren nach einem der vorhergehenden Ansprüche,
**dadurch gekennzeichnet, dass** die Brennstoffzellenanordnung (2) unmittelbar vor dem Unterbrechen der Betriebsgaszufuhr bei einer um zumindest 5 K höheren Temperatur als einer für einen Nennlastbetrieb vorgesehenen Solltemperatur betrieben wird.

9. Verfahren nach einem der vorhergehenden Ansprüche,
**dadurch gekennzeichnet, dass** nach der Unterbrechung der Betriebsgaszufuhr zur Erhöhung des Stroms ein Kurschluss in einem Stromkreis (20) der Brennstoffzellenanordnung (2) erzeugt wird.

10. Verfahren nach einem der vorhergehenden Ansprüche,
**dadurch gekennzeichnet, dass** die Zellspannung der Brennstoffzellen (4) in Abhängigkeit vom Strom durch die Brennstoffzellen (4) erfasst wird und bei einem Einbruch der Zellspannung auf einen Wert unterhalb eines Minimalwerts die Betriebsgaszufuhr unter Aufrechterhalten des elektrischen Stroms unterbrochen wird.

11. Verfahren nach einem der vorhergehenden Ansprüche,
**dadurch gekennzeichnet, dass** das Betriebsgas (10) mit einem Inertgas vermischt in die Brennstoffzellenanordnung (2) eingeführt wird.

12. Brennstoffzellenanordnung (2) mit einer Anzahl von elektrisch in Reihe geschalteten Brennstoffzellen (4) und einem Steuermittel (26) zum Steuern einer Betriebsgaszufuhr zu den Brennstoffzellen (4) und eines Stromflusses durch die Brennstoffzellen (4), **dadurch gekennzeichnet, dass** das Steuermittel (26) dazu vorgesehen ist, die Betriebsgaszufuhr unter Aufrechterhalten des elektrischen Stromflusses durch die Brennstoffzellen (4) zu unterbrechen und ein Verfahren nach einem der Ansprüche 1 bis 11 durchzuführen.

13. Brennstoffzellenanordnung (2) nach Anspruch 12,
**dadurch gekennzeichnet, dass** die Brennstoffzellen (4) jeweils durch eine Eintrittskanalanordnung (14) mit einem Versorgungskanal (12) und einer Austrittskanalanordnung (16) mit einem Entsorgungskanal (18) verbunden sind und die Eintrittskanalanordnung (14) einen geringeren Strömungswiderstand aufweist als die Austrittskanalanordnung (16).

14. Brennstoffzellenanordnung (2) nach Anspruch 13,
**dadurch gekennzeichnet, dass** die Eintrittskanalanordnung (14) mehr Eintrittskanäle (48) aufweist als die Austrittskanalanordnung (16) Austrittskanäle (50).

15. Brennstoffzellenanordnung (2) nach Anspruch 13 oder 14,
**dadurch gekennzeichnet, dass** die Eintrittskanalanordnung (14) länger ist als die Austrittskanalanordnung (16).

## Claims

1. Method for cleaning contaminants from at least one inlet channel for operating gas of at least one fuel cell undersupplied with operating gas of a fuel cell arrangement (2), which contaminants accumulate on the at least one inlet channel in the area of an opening to a supply channel carrying the operating gas, in which the operating gas (10) and electrical current are conveyed through electrically series-connected fuel cells (4) of the fuel cell arrangement (2), wherein a supply of operating gas is interrupted while the electric current is maintained wherein, in at least the at least one undersupplied fuel cell, a gas build-up is generated and a gas formed thereby is created in a volume such that some of the gas formed flows at least out of the at least one undersupplied fuel cell via the at least one inlet channel into the supply channel.

2. Method according to claim 1,
**characterised in that** the supply of operating gas is reestablished and operating gas (10) flows to the formed gas.

3. Method according to claim 1 or 2,
**characterised in that** gas containing oxygen and hydrogen is conveyed as two operating gases (10) through the fuel cells (4) and the supply of gas containing hydrogen is interrupted while maintaining the supply of gas containing oxygen and of the electric current.

4. Method according to one of the preceding claims,
**characterised in that** a negative cell voltage occurring after the interruption of the supply of operating gas is detected and the current is interrupted on reaching a negative cell voltage limit value.

5. Method according to one of claims 1 to 3,
**characterised in that** a negative cell voltage occurring after interruption of the operating gas supply is detected, that a duration of the occurrence of the negative cell voltage is detected and that the current is interrupted if a critical period of time is exceeded.

6. Method according to one of claims 1 to 3,
**characterised in that** a negative cell voltage occurring after interruption of the operating gas supply and a period of time during which the negative cell voltage occurs is detected, that during the occurrence of the negative cell voltage an integral over the current according to the time is formed and the current is interrupted if a critical integral value is exceeded.

7. Method according to one of the preceding claims,
**characterised in that** the fuel cell arrangement (2) is operated immediately before the interruption of the operating gas supply over a period of at least 2 min at at least 90% of its rated load.

8. Method according to one of the preceding claims,
**characterised in that** the fuel cell arrangement (2) is operated immediately before the interruption of the operating gas supply at an at least 5 K higher temperature than a setpoint temperature provided for rated load operation.

9. Method according to one of the preceding claims,
**characterised in that**, after the interruption of the operating gas supply, to increase the current, a short circuit is generated in a circuit (20) of the fuel cell arrangement (2).

10. Method according to one of the preceding claims,
**characterised in that** the cell voltage of the fuel cells (4) is detected as a function of current through the fuel cells (4) and with a collapse of the cell voltage to a value below a minimum value the supply of operating gas is interrupted while maintaining the electrical current.

11. Method according to one of the preceding claims,
**characterised in that** the operating gas (10) is mixed with an inert gas and introduced into the fuel cell arrangement (2).

12. Fuel cell arrangement (2) with a number of fuel cells (4) connected electrically in series and a control means (26) for controlling a supply of operating gas for the fuel cells (4) and a flow of current through the fuel cells (4),
**characterised in that** the control means (26) is provided to interrupt the supply of operating gas while maintaining the flow of electrical current through the fuel cells (4) and to carry out a method according to one of claims 1 to 11.

13. Fuel cell arrangement (2) according to claim 12,
**characterised in that** the fuel cells (4) are connected in each case by an inlet channel arrangement (14) to a supply channel (12) and by an outlet channel arrangement (16) to a diposal channel (18) and the inlet channel arrangement (14) has a lower flow resistance than the outlet channel arrangement (16).

14. Fuel cell arrangement (2) according to claim 13,
**characterised in that** the inlet channel arrangement (14) has more inlet channels (48) than the outlet channel arrangement (16) has outlet channels (50).

15. Fuel cell arrangement (2) according to claim 13 or claim 14,
**characterised in that** the inlet channel arrangement (14) is longer than the outlet channel arrangement (16).

## Revendications

1. Procédé de nettoyage d'au moins un canal d'entrée d'un gaz de fonctionnement d'au moins une pile à combustible, sous-alimentée en gaz de fonctionnement, d'un agencement ( 2 ) de piles à combustible, pour en enlever des impuretés qui gênent le passage dans le au moins un canal d'entrée dans la zone d'une ouverture menant à un canal d'alimentation dans lequel passe le gaz de fonctionnement, dans lequel on fait passer le gaz (10) de fonctionnement et du courant électrique dans des piles ( 4 ) à combustible, montées électriquement en série, de l'agencement ( 2 ) de piles à combustible, un apport de gaz de fonctionnement étant interrompu, tout en maintenant le courant électrique, dans lequel on fait fonctionner, de manière à former du gaz, au moins la au moins une pile à combustible sous-alimentée et on produit du gaz formé en une certaine quantité, en ce que on fait passer le gaz formé au moins en partie au moins de la au moins une pile à combustible sous-alimentée dans le canal d'alimentation par le au moins un canal d'entrée.

2. Procédé suivant la revendication 1,
**caractérisé en ce que** l'on ménage à nouveau l'apport de gaz de fonctionnement et du gaz ( 10 ) de fonctionnement au gaz formé.

3. Procédé suivant la revendication 1 ou 2,
**caractérisé en ce que** l'on fait passer du gaz contenant de l'oxygène et du gaz contenant de l'hydrogène comme deux gaz
( 10 ) de fonctionnement dans les piles ( 4 ) à combustible et on interrompt l'apport de gaz contenant de l'hydrogène, tout en maintenant l'apport de gaz contenant de l'oxygène et le passage du courant électrique.

4. Procédé suivant l'une des revendications précédentes, **caractérisé en ce que** l'on détecte des tensions négatives de pile se produisant après l'interruption de l'apport de gaz de fonctionnement et on interrompt le courant électrique lorsqu'une valeur limite de tension négative de pile est atteinte.

5. Procédé suivant l'une des revendications 1 à 3, **caractérisé en ce que** l'on détecte des tensions négatives de pile se produisant après l'interruption de l'apport de gaz de fonctionnement, **en ce qu'**on détecte une durée de l'apparition de la tension négative de pile et **en ce qu'**on interrompt le courant électrique lorsqu'une durée critique est dépassée.

6. Procédé suivant l'une des revendications 1 à 3, **caractérisé en ce que** l'on détecte des tensions négatives de pile se produisant après l'interruption de l'apport de gaz de fonctionnement et une durée de l'apparition de la tension négative de pile, **en ce que** pendant l'apparition de la tension négative de pile on forme une intégrale du courant électrique en fonction du temps et on interrompt le courant électrique lorsqu'une valeur critique de l'intégrale est dépassée.

7. Procédé suivant l'une des revendications précédentes, **caractérisé en ce que** l'on fait fonctionner l'agencement ( 2 ) de piles à combustible juste avant l'interruption de l'apport de gaz de fonctionnement pendant un laps de temps d'au moins 2 minutes jusqu'à au moins 90% de sa charge nominale.

8. Procédé suivant l'une des revendications précédentes, **caractérisé en ce que** l'on fait fonctionner l'agencement ( 2 ) de piles à combustible juste avant l'interruption de l'apport de gaz de fonctionnement à une température plus haute d'au moins 5 K qu'une température de consigne prévue pour un fonctionnement en charge nominale.

9. Procédé suivant l'une des revendications précédentes, **caractérisé en ce qu'**après l'interruption de l'apport de fonctionnement, on produit pour augmenter le courant un court-circuit dans un circuit ( 20 ) de l'agencement ( 2 ) de piles à combustible.

10. Procédé suivant l'une des revendications précédentes, **caractérisé en ce que** l'on détecte la tension des piles ( 4 ) à combustible en fonction du courant passant électrique dans les piles ( 4 ) à combustible et, si la tension de la pile devient inférieure à une valeur minimum, on interrompt l'apport de gaz de fonctionnement, tout en maintenant le courant électrique.

11. Procédé suivant l'une des revendications précédentes, **caractérisé en ce que** l'on introduit le gaz ( 10 ) de fonctionnement mélangé à un gaz inerte dans l'agencement ( 2 ) de piles à combustible.

12. Agencement ( 2 ) de piles à combustible, comprenant un certain nombre de piles ( 4 ) à combustible montées électriquement en série et un moyen ( 26 ) de commande pour commander un apport de gaz de fonctionnement aux piles ( 4 ) à combustible et un flux de courant électrique dans les piles ( 4 ) à combustible, **caractérisé en ce que** le moyen ( 26 ) de commande est prévu pour interrompre l'apport de gaz de fonctionnement, tout en maintenant le flux de courant électrique dans les piles ( 4 ) à combustible et pour effectuer un procédé suivant l'une des revendications 1 à 11.

13. Agencement ( 2 ) de piles à combustible suivant la revendication 12,
**caractérisé en ce que** les piles ( 4 ) à combustible sont reliées, respectivement par un agencement ( 14 ) de canal d'entrée, par un canal ( 12 ) d'alimentation et par un agencement ( 16 ) de canal de sortie à un canal ( 18 ) d'évacuation et l'agencement ( 14 ) de canal d'entrée a une résistance à l'écoulement plus petite que l'agencement ( 16 ) de canal de sortie.

14. Agencement ( 2 ) de piles à combustible suivant la revendication 13,
**caractérisé en ce que** l'agencement ( 14 ) de canal d'entrée a plus de canaux ( 48 ) d'entrée que l'agencement ( 16 ) de canal de sortie n'a de canaux ( 50 ) de sortie.

15. Agencement ( 2 ) de piles à combustible suivant la revendication 13 ou 14,
**caractérisé en ce que** l'agencement ( 14 ) de canal d'entrée est plus long que l'agencement ( 16 ) de canal de sortie.
